# FASCICULE DE BREVET EUROPEEN

(11) **EP 1 100 690 B1**
(45) Date de publication et mention de la délivrance du brevet: **12.05.2004**
(21) Numéro de dépôt: 99932941.0
(22) Date de dépôt: 21.07.1999
(51) Int. Cl.: B60K 6/04

(54) **GROUPE MOTOPROPULSEUR HYBRIDE COMPORTANT DEUX MACHINES ELECTRIQUES**
HYBRIDANTRIEBSGRUPPE MIT ZWEI ELEKTRISCHEN MASCHINEN
HYBRID ENGINE TRANSMISSION UNIT COMPRISING TWO ELECTRICAL MACHINES

(30) Priorité: 28.07.1998 FR 9809654
(43) Date de publication de la demande: 23.05.2001
(73) Titulaire: Renault s.a.s., 92100 Boulogne Billancourt (FR)
(72) Inventeur: RAOUL, Michel, F-78990 Elancourt (FR)
(86) Numéro de dépôt international: PCT/FR1999/001795
(87) Numéro de publication internationale: WO 2000/006407

(56) Documents cités:
- EP-A- 0 791 495
- DE-A- 4 124 479
- FR-A- 2 734 318
- FR-A- 2 742 703

## Description

L'invention concerne un groupe motopropulseur pour véhicule à motorisation hybride.

L'invention concerne plus particulièrement un groupe motopropulseur pour véhicule à motorisation hybride fonctionnant selon plusieurs configurations, du type dans lequel des éléments d'un train épicycloïdal tels qu'une couronne, un planétaire, et un porte-satellite(s) sont liés en rotation à des organes du groupe motopropulseur tels qu'un arbre d'une première machine électrique, un arbre de sortie d'un moteur thermique, et un pont destiné à transmettre une puissance motrice à des roues du véhicule.

On connaît de nombreux exemples de groupes motopropulseurs pour véhicules à motorisation hybride. Ceux-ci relèvent essentiellement de deux groupes, les hybrides dits "série" et les hybrides dits "parallèles".

Les hybrides série sont des groupes motopropulseurs dans lesquels un moteur thermique tel qu'un moteur à pistons ou une turbine entraîne un générateur qui produit de l'électricité pour alimenter un ou plusieurs moteurs électriques liés aux roues du véhicule. Une batterie d'accumulateurs permet de stocker de l'énergie électrique pour faire fonctionner le moteur électrique.

Le document FR-A-2.734.318 décrit un tel groupe motopropulseur.

Le document DE-A-4 127 479 décrit un groupe motopropulseur selon le préambule de la revendication 1.

Le rendement d'une telle chaîne de transmission de la puissance est bon, mais un tel dispositif présente l'inconvénient de nécessiter des organes électriques encombrants et pénalisants en terme de poids embarqué. Les organes électriques utilisés doivent en effet assurer la propulsion du véhicule à toutes les vitesses, ce qui nécessite l'emploi d'organes de forte taille. De plus, en cas de défaillance d'un des organes électriques, le véhicule est immobilisé.

Les hybrides parallèles sont des groupes motopropulseurs dans lesquels un moteur thermique, une machine électrique alimentée par une batterie d'accumulateurs, et une transmission mécanique sont couplés par l'intermédiaire d'un dispositif permettant de les lier en rotation les uns aux autres, la machine électrique étant susceptible de fonctionner indifféremment en moteur ou en générateur de courant. Il s'agit généralement de dispositifs comportant un train épicycloïdal aux éléments duquel sont accouplés la machine électrique, le moteur thermique et un pont. Le moteur thermique est par exemple lié en rotation au porte-satellites, la machine électrique au planétaire, et le pont à la couronne.

Conventionnellement, les groupes motopropulseurs de type hybride parallèle présentent l'avantage de pouvoir utiliser les deux types de propulsion thermique et électrique, alternativement ou simultanément.

Le moteur thermique et la machine électrique étant couplés l'un à l'autre par l'intermédiaire du train épicycloïdal, le véhicule peut par exemple fonctionner selon un mode purement électrique, généralement à basse vitesse et/ou en ville, ou selon un mode hybride, généralement aux vitesses intermédiaires, ou encore selon un mode thermique, généralement aux plus hautes vitesses. Le passage d'une configuration de fonctionnement à une autre est assuré par des moyens de commande qui assurent toutes les fonctions de commande et de gestion de puissance. Cette disposition permet d'utiliser directement la puissance motrice du moteur thermique pour la propulsion du véhicule et par conséquent, la machine électrique ne jouant qu'un rôle d'appoint, de n'utiliser que des organes électriques de taille et de poids réduits. Un des rôles dévolus au moteur thermique est de recharger la batterie d'accumulateurs par l'intermédiaire de la machine électrique utilisée en générateur de courant. Un tel groupe motopropulseur ne nécessite donc pas de moteur électrique encombrant. En outre, la possibilité d'utiliser préférentiellement le moteur thermique ou la machine électrique utilisée en moteur permet d'éviter que le véhicule ne soit immobilisé en cas de défaillance de l'un des deux moteurs.

Le train épicycloïdal permet d'établir différents rapports de démultiplication en fonction de la mise en action des différents organes du groupe motopropulseur et de la vitesse du véhicule. Ainsi, à basse ou à moyenne vitesse du véhicule, la mise en action de la machine électrique permet d'utiliser la train épicycloïdal comme un variateur continu de vitesse.

De la sorte les basses vitesses sont conventionnellement associées à un usage de la machine électrique utilisée en tant que moteur, les vitesses intermédiaires conviennent mieux à un usage hybride faisant intervenir le moteur thermique et la machine électrique utilisée en moteur électrique, et les hautes vitesses sont conventionnellement dévolues à un usage du seul moteur thermique, la machine électrique fonctionnant alors en alternateur.

Dans le cadre des réglementations antipollution visant à réduire les émissions polluantes, il est souhaitable de pouvoir bénéficier d'une possibilité d'utilisation hybride lorsque le véhicule évolue à des hautes vitesses.

Or, les groupes motopropulseurs existant actuellement ne permettent pas d'obtenir les rapports de démultiplication adéquats qui permettent un tel usage.

Pour remédier à cet inconvénient, l'invention propose un groupe motopropulseur permettant d'utiliser le train épicycloïdal en variateur de vitesses, permettant de grandes démultiplications.

Dans ce but l'invention propose un groupe motopropulseur selon la revendication 1.

Selon d'autres caractéristiques de l'invention:
- la couronne est liée en rotation au pont, le planétaire est lié en rotation à l'arbre de la première machine électrique, et le porte-satellites est lié en rotation à l'arbre de la seconde machine électrique ;
- l'arbre de la première machine électrique est lié à un carter fixe du groupe motopropulseur par l'intermédiaire d'un premier dispositif de roue libre, pour ne tourner que dans un sens ;
- l'arbre de la seconde machine électrique est lié en rotation à l'arbre de sortie du moteur thermique par l'intermédiaire d'un second dispositif de roue libre pour empêcher le moteur thermique de tourner plus vite que la seconde machine électrique et pour que la seconde machine électrique ne puisse tourner que dans le sens de l'arbre de sortie du moteur thermique ;
- les deux machines électriques peuvent chacune fonctionner en moteur ou en générateur de courant ;
- les moyens de commande sont susceptibles de déterminer une première configuration du groupe motopropulseur à l'arrêt du véhicule dans laquelle le moteur thermique fonctionne, la première machine électrique fonctionne en moteur et la seconde machine électrique fonctionne en générateur de courant ;
- les moyens de commande sont susceptibles de déterminer une deuxième configuration du groupe motopropulseur à l'arrêt du véhicule dans laquelle le moteur thermique, la première machine électrique, et la seconde machine électrique ne fonctionnent pas ;
- les moyens de commande sont susceptibles de déterminer une troisième configuration du groupe motopropulseur en marche avant du véhicule dans laquelle le moteur thermique ne fonctionne pas, et dans lequel les première et seconde machines électriques fonctionnent en moteur ;
- les moyens de commande sont susceptibles de déterminer une quatrième configuration du groupe motopropulseur en marche avant du véhicule dans laquelle le moteur thermique fonctionne, la première machine électrique ne fonctionne pas, et la seconde machine électrique fonctionne en générateur de courant ;
- les moyens de commande sont susceptibles de déterminer une cinquième configuration du groupe motopropulseur en marche avant du véhicule dans laquelle le moteur thermique fonctionne, la première machine électrique ne fonctionne pas, et la seconde machine électrique fonctionne en moteur ;
- les moyens de commande sont susceptibles de déterminer une sixième configuration du groupe motopropulseur en marche avant du véhicule dans laquelle le moteur thermique fonctionne, la première machine électrique fonctionne en moteur, et la seconde machine électrique fonctionne en générateur de courant ;
- les moyens de commande sont susceptibles de déterminer une septième configuration du groupe motopropulseur en marche avant du véhicule dans laquelle le moteur thermique fonctionne, et dans laquelle les première et seconde machines électriques fonctionnent en moteurs ;
- les moyens de commande sont susceptibles d'agir sur des moyens d'immobilisation de l'arbre de la seconde machine électrique par rapport au carter fixe du groupe motopropulseur, pour déterminer une huitième configuration du groupe motopropulseur en marche arrière du véhicule dans laquelle le moteur thermique ne fonctionne pas, la première machine électrique fonctionne en moteur et la seconde machine électrique ne fonctionne pas, l'arbre de la seconde machine électrique étant immobilisé par les moyens d'immobilisation ;
- les moyens de commande sont susceptibles de déterminer une neuvième configuration du groupe motopropulseur en marche avant et en ralentissement du véhicule, dans laquelle le moteur thermique ne fonctionne pas, et dans laquelle les première et seconde machines électriques fonctionnent en générateurs de courant ;
- les moyens de commande sont susceptibles de déterminer une dixième configuration du groupe motopropulseur en marche avant et en ralentissement du véhicule, dans laquelle le moteur thermique fonctionne, et dans laquelle les première et seconde machines électriques fonctionnent en générateurs de courant ;

D'autres caractéristiques et avantages de l'invention apparaîtront à la lecture de la description détaillée qui suit pour la compréhension de laquelle on se reportera aux dessins annexés dans lesquels :
- la figure 1 est un schéma en vue longitudinale d'un groupe motopropulseur selon l'invention ;et
- la figure 2 est un tableau des différentes configurations de fonctionnement du groupe motopropulseur selon l'invention, et des modes de fonctionnement associés du moteur thermique, des deux machines électriques, et des moyens d'immobilisation en rotation de l'arbre de la seconde machine électrique.

Dans la description qui va suivre, des chiffres de référence identiques désignent des pièces identiques ou ayant des fonctions similaires.

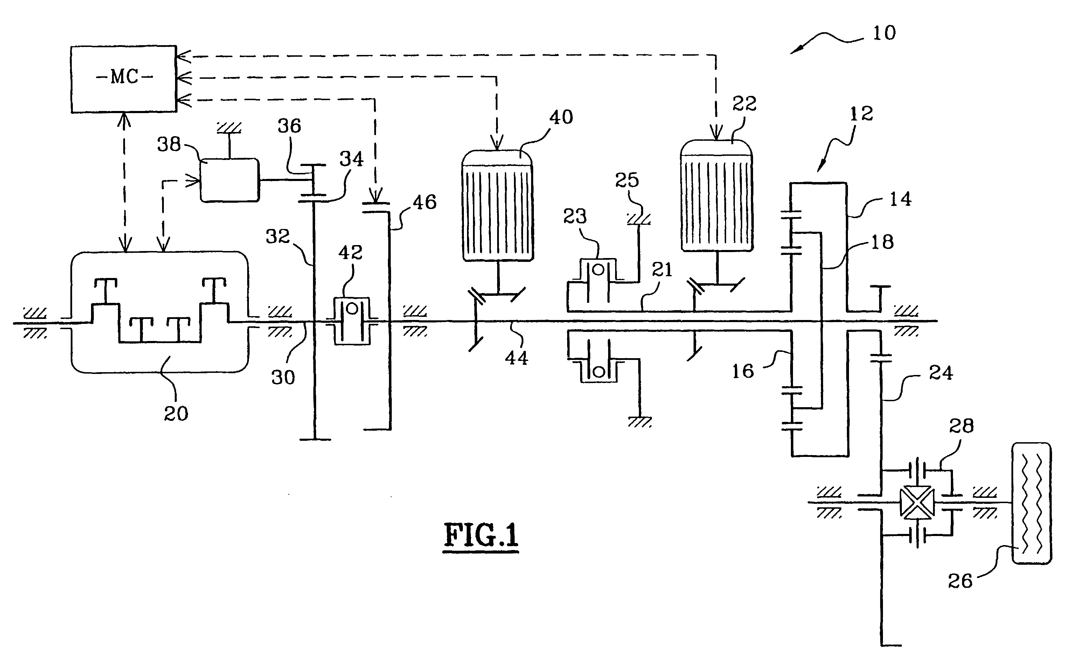

On voit sur la figure 1 l'ensemble d'un groupe motopropulseur 10 pour véhicule à motorisation hybride réalisé conformément à l'invention.

De manière connue, un train épicycloïdal 12, qui comporte une couronne 14, un planétaire 16 et un porte-satellites 18, est lié en rotation à différents organes du groupe motopropulseur 10.

Ainsi, un moteur thermique 20 est lié en rotation au porte-satellites 18 du train, épicycloïdal 12, une première machine électrique 22 est liée en rotation, par l'intermédiaire d'un arbre 21, au planétaire 16 du train épicycloïdal 12, et un pont 24 est lié en rotation à la couronne 14 du train épicycloïdal 12. Le pont 24 est susceptible de transmettre une puissance motrice à des roues 26 du véhicule par l'intermédiaire d'un différentiel 28.

La première machine électrique 22 est représentée à la figure 1 engrenant avec l'arbre 21 par l'intermédiaire d'un engrenage à renvoi d'angle pour faciliter la compréhension de l'architecture du groupe motopropulseur 10. Dans le mode de réalisation préféré de l'invention, la première machine 22 est coaxiale à l'arbre 21 et l'arbre 21 est un arbre de la première machine électrique 22 qui traverse son stator (non représenté).

Conformément à l'invention, la première machine électrique 22 est liée en rotation à un premier dispositif de roue libre 23, qui est interposé entre l'arbre 21 et un carter fixe 25 du groupe motopropulseur, de sorte que l'arbre 21 et la première machine électrique 22 ne peuvent tourner que dans un seul sens.

De manière connue, le moteur thermique 20 comporte un arbre de sortie 30 sur lequel est agencé un volant moteur 32 qui comporte un jeu de dentures 34 destiné à engrener avec un pignon 36 d'un démarreur 38 qui est susceptible de lancer le moteur thermique 20 dans certaines configurations de fonctionnement du groupe motopropulseur 10.

Conformément à l'invention, une seconde machine électrique 40 est interposée entre le moteur thermique 20 et le train épicycloïdal 12.

La seconde machine électrique 40 est représentée à la figure 1 engrenant par l'intermédiaire d'un engrenage à renvoi d'angle avec un arbre 44 qui est agencé en position intermédiaire entre le moteur thermique 20 et le porte-satellite(s) 18. Cette représentation facilite la compréhension de l'architecture du groupe motopropulseur 10. Toutefois, dans le mode de réalisation préféré de l'invention, la seconde machine 40 est coaxiale à l'arbre 44 qui est un arbre de la seconde machine électrique 40 qui traverse son stator (non représenté).

La seconde machine électrique 40 est donc liée en rotation au porte-satellites 18 du train épicycloïdal 12 par l'intermédiaire de l'arbre 44, et elle est accouplée au moteur thermique 20 par l'intermédiaire d'un deuxième dispositif de roue libre 42 qui est destiné à empêcher que le moteur thermique 20 ne tourne plus vite que la seconde machine électrique 40.

Le deuxième dispositif de roue libre 42 est plus précisément lié en rotation au moteur thermique 20 par un accouplement réalisé sur le volant moteur 32, de sorte que le dispositif de roue libre 42 réalise aussi l'accouplement de l'arbre de sortie 30 du moteur thermique à l'arbre d'entrée 44 du porte-satellites 18

Par ailleurs, l'arbre d'entrée 44 du porte-satellites 18 comporte des moyens d'immobilisation 46 de la seconde machine électrique 40 qui sont, par exemple, avantageusement réalisés sous la forme d'un frein qui est agencé sur l'arbre d'entrée 44 du porte-satellites 18. De la sorte, le porte-satellites 18 du train épicycloïdal 12 et la machine électrique 40 peuvent être complètement immobilisés en rotation.

Enfin, des moyens de commande MC sont susceptibles de commander le fonctionnement du moteur thermique 20, des moyens d'immobilisation 46 de la seconde machine électrique 40, et la première et seconde machines électriques 22 et 40.

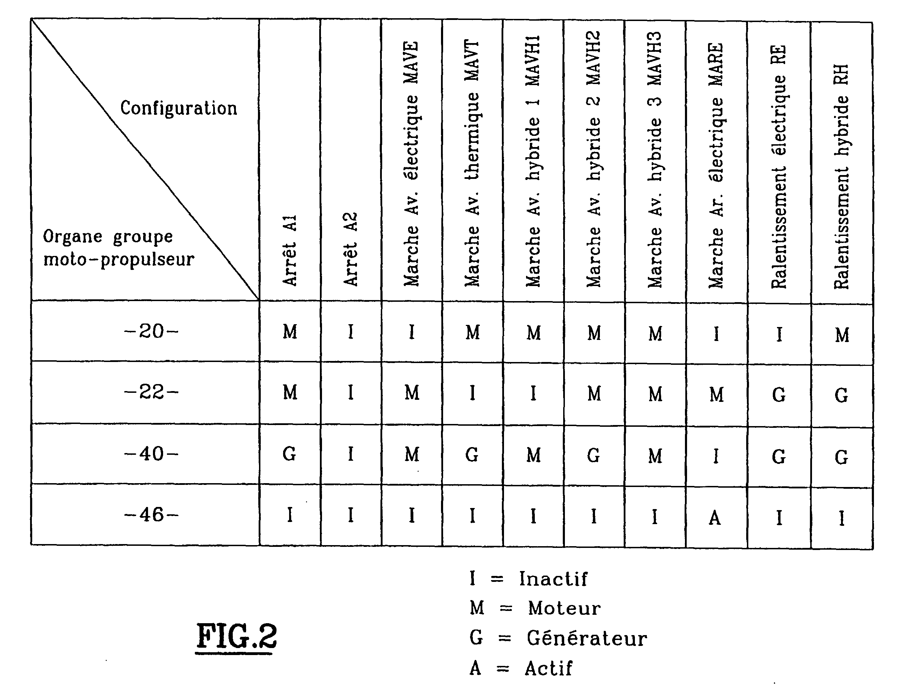

La figure 2 illustre le fonctionnement du groupe motopropulseur 10 suivant plusieurs configurations commandées par les moyens de commande MC.

Comme il a été décrit précédemment en référence à la figure 1, les moyens de commande MC sont susceptibles de définir plusieurs configurations de fonctionnement du groupe motopropulseur 10, c'est à dire de commander le fonctionnement du moteur thermique 20, des première et seconde machines électriques 22 et 40, et des moyens d'immobilisation 46, ces organes figurant dans la colonne de gauche du tableau de la figure 2.

Conformément à l'invention, le groupe motopropulseur 10 est susceptible de fonctionner suivant dix configurations, qui comprennent deux configurations du véhicule à l'arrêt, cinq configurations du véhicule en marche avant, une configuration du véhicule en marche arrière et deux configurations de ralentissement du véhicule, ces configurations figurant dans la ligne supérieure du tableau de la figure 2.

Par convention, sur le tableau de la figure 2, un élément sera dit inactif I quand il ne fonctionne pas, actif A quand il fonctionne, moteur M quand il fonctionne plus spécifiquement en moteur thermique ou électrique, et G quand il fonctionne en générateur de courant.

Lorsque les moyens de commande commandent que le moteur thermique 20 soit moteur M, celui-ci, s'il ne l'est déjà, est automatiquement démarré par le démarreur 38 dont le pignon 36 engrène avec le volant moteur 34.

Comme illustré sur le tableau de la figure 2, les moyens de commande MC du véhicule sont susceptibles de déterminer une première configuration A1 du groupe motopropulseur 10 à l'arrêt du véhicule dans laquelle le moteur thermique 20 est moteur M, la première machine électrique 22 fonctionne en moteur M, la deuxième machine électrique 40 fonctionne en générateur de courant G, et les moyens d'immobilisation 46 sont inactifs I. Dans cette configuration A1, la couronne 14 du train épicycloïdal 12 est immobile du fait de la loi de composition des vitesses dans le train épicycloïdal 12. En effet, le mouvement de rotation du moteur thermique 20 transmis par l'arbre 44 du porte-satellites 18 est annulé par le mouvement de rotation de la première machine électrique 22 qui est transmis à l'arbre d'entrée 21 du planétaire 16, de sorte que la couronne 14 est immobile et ne transmet aucun mouvement aux roues 26 du véhicule. Avantageusement, cette configuration permet de maintenir le véhicule à l'arrêt tout en maintenant le moteur thermique 20 tournant pour recharger des batteries d'accumulateurs (non représentées) du véhicule par l'intermédiaire de la seconde machine électrique 40 et éventuellement permettre un redémarrage ultérieur du véhicule. Avantageusement, cette configuration permet aussi d'alimenter tous les accessoires qui requièrent beaucoup d'énergie, comme le système de chauffage et de climatisation.

Dans une deuxième configuration A2 du véhicule à l'arrêt, tous les organes du groupe motopropulseur 10, c'est-à-dire le moteur thermique 20, les première et seconde machines électriques 22 et 40, et les moyens d'immobilisation 46 sont inactifs I, cette configuration correspondant par exemple à un état du véhicule dans lequel il est par exemple en situation de stationnement.

Dans le cadre d'une utilisation du véhicule pour laquelle il est requis de réduire les émissions polluantes, ou pour de faibles vitesses du véhicule pour lequel il consomme peu d'énergie, comme c'est le cas par exemple lorsque le véhicule circule en agglomération, les moyens de commande MC sont susceptibles de définir une troisième configuration MAVE de fonctionnement du groupe motopropulseur 10 en marche avant électrique dans laquelle le groupe motopropulseur 10 fonctionne suivant un mode de marche avant électrique du véhicule. Dans cette configuration, le moteur thermique 20 est inactif I, les première et seconde machines électriques 22 et 40 fonctionnent en moteur M et les moyens d'immobilisation 46 sont inactifs 1. Avantageusement, cette configuration MAVE permet au véhicule d'évoluer en n'utilisant qu'une source d'énergie électrique, ce qui convient particulièrement à un usage du véhicule en agglomération tant que des batteries d'accumulateurs du véhicule peuvent fournir suffisamment d'énergie pour permettre au véhicule de fonctionner entièrement électriquement.

Lorsqu'il est requis que le véhicule évolue à de hautes vitesses, ou que les batteries d'accumulateurs (non représentées) sont déchargées, les moyens de commande MC sont susceptibles de définir une quatrième configuration de fonctionnement MAVT du groupe motopropulseur 10 correspondant à un mode de marche avant thermique. Dans cette configuration, représentée dans la quatrième colonne en partant de la gauche dans le tableau de la figure 2, le moteur thermique 20 est moteur M et entraîne le train épicycloïdal 12 du véhicule, la première machine électrique 22 est inactive I et tourne librement sans produire ni consommer de courant, la seconde machine électrique 40 fonctionne en générateur G de courant pour recharger la batterie d'accumulateurs, et les moyens d'immobilisation 46 sont inactifs I.

Les moyens de commande MC sont aussi susceptibles de déterminer trois configurations de fonctionnement en marche avant hybride MAVH1, MAVH2, et MAVH3, du groupe motopropulseur 10 qui correspondent correspondant à différentes utilisations du véhicule.

Dans une cinquième configuration MAVH1 de marche avant hybride du groupe motopropulseur 10 définie par les moyens de commande MC, le moteur thermique 20 est moteur M, la première machine électrique 22 est inactive I et ne tourne pas. En effet, la planétaire 16 du train épicycloïdal est immobile car il est lié à la roue libre 23 qui sert de point de réaction au train épicycloïdal 12. De ce fait, la première machine électrique 22 est elle aussi immobile. La seconde machine électrique 40 fonctionne en moteur M et les moyens d'immobilisation 46 sont inactifs I. Dans cette configuration, la seconde machine électrique 40 tourne à la même vitesse que le moteur thermique 20 de sorte que la puissance motrice ainsi fournie au porte-satellites 18 du train épicycloïdal 12 est intégralement transmise à la couronne 14 du train épicycloïdal 12. Ce mode de fonctionnement définit le même rapport de démultiplication les deux configurations précédentes MAVE et MAVT de marche avant, mais permet d'obtenir une vitesse maximum plus importante pour le véhicule car les puissances de la seconde machine électrique 40 et du moteur thermique 20 s'ajoutent.

Les moyens de commande MC sont susceptibles de définir une sixième configuration MAVH2 de fonctionnement hybride du groupe motopropulseur 10 , comme représenté à la sixième colonne du tableau de la figure 2, dans laquelle le moteur thermique 20 fonctionne en moteur M, la première machine électrique 22 fonctionne en moteur M, la seconde machine électrique 40 fonctionne en générateur G et les moyens d'immobilisation 46 sont inactifs I. Dans cette configuration, le train épicycloïdal 12 combine les vitesses du moteur thermique 20 et de la première machine électrique 22 pour les transmettre à la couronne 14 du train épicycloïdal 12. Avantageusement, la seconde machine électrique 40, utilisée en générateur, permet de recharger les batteries d'accumulateurs du véhicule. Cette configuration est particulièrement intéressante car elle permet d'obtenir une vitesse maximale supérieure à celle obtenue dans la configuration de fonctionnement MAVH1 précédente. En effet, le train épicycloïdal 12 est ici utilisé en variateur de vitesses, ce qui permet de faire fonctionner le moteur thermique 20 à son régime de puissance maximale, tout en rechargeant la batterie d'accumulateurs.

Les moyens de commande MC sont susceptibles de définir une septième configuration MAVH3 de fonctionnement en marche avant hybride du véhicule dans laquelle le moteur thermique 20 est moteur M, les première et seconde machines électriques 22 et 40 fonctionnent aussi en moteur M, et les moyens d'immobilisation 46 sont inactifs I. Dans cette configuration, qui correspond à un usage intensif du véhicule pour lequel le maximum de puissance est nécessaire, le train épicycloïdal 12 transmet la puissance motrice en provenance de tous les organes du groupe motopropulseur 10 aux roues 26 du véhicule. Cette configuration permet d'obtenir la vitesse maximum que peut fournir le groupe motopropulseur 10 mais elle est toutefois limitée par la capacité des batteries d'accumulateurs du véhicule, celles-ci n'étant pas rechargées par une quelconque des deux machines électriques 22 ou 40.

Les moyens de commande MC sont aussi susceptibles de définir une configuration MARE de fonctionnement en marche arrière électrique du véhicule.

Dans cette configuration, le moteur thermique 20 est arrêté et donc inactif I, la première machine électrique 22 fonctionne en moteur M, la seconde machine électrique 40 est inactive est immobilisée par les moyens d'immobilisation 46 qui sont actifs A. Dans cette configuration, le train épicycloïdal 12 réalise l'inversion du mouvement de rotation de la première machine électrique 22 par l'intermédiaire des satellites portés par le porte-satellites 18 du train épicycloïdal, ce mouvement de rotation étant transmis à la couronne 14 du train épicycloïdal 12 puis aux roues 26 du véhicule.

Les moyens de commande MC sont aussi susceptibles de définir d'autres configurations de fonctionnement RE et RH pour lesquelles le groupe motopropulseur 10 peut être utilisé afin de ralentir le véhicule et peut constituer un moyen de rechargement des batteries d'accumulateurs.

Dans une neuvième configuration RE de fonctionnement en ralentissement électrique du véhicule, le moteur thermique 20 est arrêté et inactif I, les première et seconde machines électriques 22 et 40 fonctionnent en générateur de courant G et les moyens d'immobilisation 46 sont inactifs I, de sorte que l'énergie cinétique du véhicule est récupérée par l'intermédiaire des roues 26 et du train épicycloïdal 12 pour entraîner les première et seconde machines électriques 22 et 40 dont le fonctionnement en générateur de courant G permet de recharger les batteries d'accumulateurs du véhicule. Cette configuration de fonctionnement du véhicule est particulièrement avantageuse, car elle permet par exemple, même en agglomération, de recharger les batteries d'accumulateurs du véhicule dès que celui-ci cesse d'accélérer et/ou est amené à ralentir. Cette possibilité de fonctionnement réalise donc un ralentisseur efficace, l'arrêt total du véhicule étant assuré par des freins conventionnels (non représentés). Cette possibilité de fonctionnement permet donc aussi, lors de la conception du véhicule, de réduire la taille et le poids des freins, ceux-ci n'ayant plus pour fonction que d'arrêter le véhicule en fin de phase de freinage.

Enfin, suivant une dixième configuration RH de fonctionnement du véhicule en ralentissement hybride, les moyens de commande MC sont susceptibles de commander le groupe motopropulseur 10 pour que le moteur thermique 20 fonctionne en moteur M, les première et seconde machines électriques 22 et 40 fonctionnent en générateur de courant G, et les moyens d'immobilisation 46 soient inactifs I. Dans cette configuration de fonctionnement, du fait de la présence du second dispositif de roue libre 42, le moteur thermique 20 fonctionne mais ne participe pas au ralentissement du véhicule, son fonctionnement n'ayant pour seul but que de permettre au véhicule de redémarrer suivant un mode de fonctionnement hybride ou thermique MAVT, MAVH1, MAVH2, ou MAVH3 lorsque la décélération est finie. Toutefois, cette configuration de fonctionnement permet, comme pour la neuvième configuration de fonctionnement précédemment décrite, de recharger les batteries d'accumulateurs (non représentées) du véhicule par l'intermédiaire des première et seconde machines électriques 22 et 40 fonctionnant en générateurs de courant G.

## Revendications

1. Groupe motopropulseur (10) pour véhicule à motorisation hybride fonctionnant selon plusieurs configurations (A1, A2, MAVE, MAVT, MAVH1, MAVH2, MAVH3, MARE, RE, RH ), du type dans lequel des éléments d'un train épicycloïdal (12) tels qu'une couronne (14), un planétaire (16), et un porte-satellite(s) (18) sont liés en rotation à des organes du groupe motopropulseur (10) tels qu'un arbre (21) d'une première machine électrique (22), un arbre de sortie (30) d'un moteur thermique (20), et un pont (28) destiné à transmettre une puissance motrice à des roues (26) du véhicule, du type qui comporte une seconde machine électrique (40) qui est interposée entre l'arbre de sortie (30) du moteur thermique (20) et l'élément du train épicycloïdal (12) qui lui est lié en rotation, et des moyens de commande (MC) qui sont susceptibles d'associer des modes de fonctionnement (I, M, G, A) déterminés du moteur thermique (20) et des deux machines électriques (22, 40) aux configurations de fonctionnement (A1, A2, MAVE, MAVT, MAVH1, MAVH2, MAVH3, MARE, RE, RH ) du groupe motopropulseur (10), **caractérisé en ce que** la couronne (14) est liée en rotation au pont (28), le planétaire (16) est lié en rotation à l'arbre (21) de la première machine électrique (22), et le porte-satellites (18) est lié en rotation à l'arbre (44) de la seconde machine électrique (40).

2. Groupe motopropulseur selon la revendication précédente, **caractérisé en ce que** l'arbre (21) de la première machine électrique (20) est lié à un carter fixe (25) du groupe motopropulseur (10) par l'intermédiaire d'un premier dispositif de roue libre (23), pour ne tourner que dans un sens.

3. Groupe motopropulseur (10) selon l'une des revendications précédentes, **caractérisé en ce que** l'arbre (44) de la seconde machine électrique (40) est lié en rotation à l'arbre de sortie (30) du moteur thermique (20) par l'intermédiaire d'un second dispositif de roue libre (42) pour empêcher le moteur thermique (20) de tourner plus vite que la seconde machine électrique (40) et pour que la seconde machine électrique (40) ne puisse tourner que dans le sens de l'arbre de sortie du moteur thermique (20).

4. Groupe motopropulseur (10) selon l'une quelconque des revendications précédentes, **caractérisé en ce que** les deux machines électriques (22, 40) peuvent chacune fonctionner en moteur (M) ou en générateur de courant (G).

5. Groupe motopropulseur (10) selon la revendication 4, **caractérisé en ce que** les moyens de commande (MC) sont susceptibles de déterminer une première configuration (A1) du groupe motopropulseur (10) à l'arrêt du véhicule dans laquelle le moteur thermique (20) fonctionne (M), la première machine électrique (22) fonctionne en moteur (M) et la seconde machine électrique (40) fonctionne en générateur de courant (G).

6. Groupe motopropulseur (10) selon la revendication 4, **caractérisé en ce que** les moyens de commande (MC) sont susceptibles de déterminer une deuxième configuration (A2) du groupe motopropulseur (10) à l'arrêt du véhicule dans laquelle le moteur thermique ( 20), la première machine électrique (22), et la seconde machine électrique (40) ne fonctionnent pas (I).

7. Groupe motopropulseur (10) selon la revendication 4, **caractérisé en ce que** les moyens de commande (MC) sont susceptibles de déterminer une troisième configuration (MAVE) du groupe motopropulseur (10) en marche avant du véhicule dans laquelle le moteur thermique (20) ne fonctionne pas (I), et dans lequel les première (22) et seconde (40) machines électriques fonctionnent en moteur (M).

8. Groupe motopropulseur (10) selon la revendication 4, **caractérisé en ce que** les moyens de commande (MC) sont susceptibles de déterminer une quatrième configuration (MAVT) du groupe motopropulseur (10) en marche avant du véhicule dans laquelle le moteur thermique (20) fonctionne (M), la première machine électrique (22) ne fonctionne pas (I), et la seconde machine électrique (40) fonctionne en générateur de courant (G).

9. Groupe motopropulseur (10) selon la revendication 4, **caractérisé en ce que** les moyens de commande (MC) sont susceptibles de déterminer une cinquième configuration (MAVH1) du groupe motopropulseur (10) en marche avant du véhicule dans laquelle le moteur thermique (20) fonctionne (M), la première machine électrique (22) ne fonctionne pas (I), et la seconde machine électrique (40) fonctionne en moteur (M).

10. Groupe motopropulseur (10) selon la revendication 4, **caractérisé en ce que** les moyens de commande (MC) sont susceptibles de déterminer une sixième configuration (MAVH2) du groupe motopropulseur (10) en marche avant du véhicule dans laquelle le moteur thermique (20) fonctionne, la première machine électrique (22) fonctionne en moteur (M), et la seconde machine électrique (40) fonctionne en générateur de courant (G).

11. Groupe motopropulseur (10) selon la revendication 4, **caractérisé en ce que** les moyens de commande (MC) sont susceptibles de déterminer une septième (MAVH3) configuration du groupe motopropulseur (10) en marche avant du véhicule dans laquelle le moteur thermique (20) fonctionne (M), et dans laquelle les première (22) et seconde (40) machines électriques fonctionnent en moteurs (M).

12. Groupe motopropulseur (10) selon la revendication 4 prise en combinaison avec la revendication 2, **caractérisé en ce que** les moyens de commande (MC) sont susceptibles d'agir sur des moyens d'immobilisation (46) de l'arbre (44) de la seconde machine électrique (40) par rapport au carter fixe (25). du groupe motopropulseur (10), pour déterminer une huitième configuration (MARE) du groupe motopropulseur (10) en marche arrière du véhicule dans laquelle le moteur thermique (20) ne fonctionne pas (I), la première machine électrique (22) fonctionne en moteur (M) et la seconde machine électrique (40) ne fonctionne pas (I), l'arbre (44) de la seconde machine électrique (44) étant immobilisé par les moyens d'immobilisation (46).

13. Groupe motopropulseur (10) selon la revendication 4, **caractérisé en ce que** les moyens de commande (MC) sont susceptibles de déterminer une neuvième configuration (RE) du groupe motopropulseur (10) en marche avant et en ralentissement du véhicule, dans laquelle le moteur thermique (20) ne fonctionne pas (I), et dans laquelle les première (22) et seconde (40) machines électriques fonctionnent en générateurs de courant (G).

14. Groupe motopropulseur (10) selon la revendication 4, **caractérisé en ce que** les moyens de commande (MC) sont susceptibles de déterminer une dixième configuration (RH) du groupe motopropulseur (10) en marche avant et en ralentissement du véhicule, dans laquelle le moteur thermique (20) fonctionne (M), et dans laquelle les première (20) et seconde (40) machines électriques fonctionnent en générateurs de courant (G).

## Patentansprüche

1. Motorenanlage (10) für ein Fahrzeug mit Hybridantrieb, die gemäß mehrer Konfigurationen arbeitet (A1, A2, MAVE, MAVT, MAVH1, MAVH2, MAVH3, MARE, RE, RH), von dem Typ, in dem die Elemente eines Planetengetriebes (12), wie etwa ein Hohlrad (14), ein Zentralrad (16) und ein Planetenträger (18) drehbar mit den Einrichtungen der Motorenanlage (10) verbunden sind, wie etwa einer Achswelle (21) einer ersten elektrischen Maschine (22), einer Abtriebswelle (30) eines Verbrennungsmotors (20) und einer Brücke (28), die dazu bestimmt ist, eine Antriebskraft auf die Räder (26) des Fahrzeugs zu übertragen, von dem Typ, der eine zweite elektrische Maschine (40) aufweist, die zwischen die Abtriebswelle (30) des Verbrennungsmotors (20) und das Element des Planetengetriebes (12) geschaltet ist, die mit ihm drehbar verbunden sind, und Mittel zur Steuerung (MC), die bestimmte Betriebsmodi (I, M, G, A) des Verbrennungsmotors (20) und der zwei elektrischen Maschinen (22, 40) den Betriebskonfigurationen (A1, A2, MAVE, MAVT, MAVH1, MAVH2, MAVH3, MARE, RE, RH) der Motoranlage (10) zuordnen kann, **dadurch gekennzeichnet, dass** das Hohlrad (14) drehbar mit der Brücke (28) verbunden ist, das Zentralrad (16) drehbar mit der Achswelle (21) der ersten elektrischen Maschine (22) verbunden ist und der Planetenträger (18) drehbar mit der Achswelle (44) der zweiten elektrischen Maschine (40) verbunden ist

2. Motorenanlage gemäß dem vorhergehenden Anspruch, **dadurch gekennzeichnet, dass** die Achswelle (21) der ersten elektrischen Maschine (20) mit einem feststehenden Gehäuse (25) der Motorenanlage (10) über eine erste Freilaufvorrichtung (23) verbunden ist, damit sie sich nur in eine Richtung dreht.

3. Motorenanlage (10) gemäß irgend einem der vorhergehenden Ansprüche, **dadurch gekennzeichnet, dass** die Achswelle (44) der zweiten elektrischen Maschine (40) drehbar mit der Abtriebswelle (30) des Verbrennungsmotors (20) über eine zweite Freilaufvorrichtung (42) verbunden ist, um zu verhindern, das sich der Verbrennungsmotor (20) schneller dreht, als die zweite elektrische Maschine (40) und damit sich die zweite elektrische Maschine (40) nur in der Richtung der Abtriebswelle des Verbrennungsmotors (20) drehen kann.

4. Motorenanlage (10) gemäß irgend einem der vorhergehenden Ansprüche, **dadurch gekennzeichnet, dass** die zwei elektrischen Maschinen (22, 40) beide als Motor (M) oder Stromgenerator (G) arbeiten können.

5. Motorenanlage (10) gemäß Anspruch 4, **dadurch gekennzeichnet, dass** die Mittel zur Steuerung (MC) eine erste Konfiguration (A1) der Motorenanlage (10) bei Stillstand des Fahrzeugs bestimmen können, in der der Verbrennungsmotor (20) arbeitet (M), die erste elektrische Maschine (22) als Motor arbeitet (M) und die zweite elektrische Maschine (40) als Stromgenerator arbeitet (G).

6. Motorenanlage (10) gemäß Anspruch 4, **dadurch gekennzeichnet, dass** die Mittel zur Steuerung (MC) eine zweite Konfiguration (A2) der Motorenanlage (10) bei Stillstand des Fahrzeugs bestimmen können, in der der Verbrennungsmotor (20), die erste elektrische Maschine (22) und die zweite elektrische Maschine (40) nicht arbeiten (I).

7. Motorenanlage (10) gemäß Anspruch 4, **dadurch gekennzeichnet, dass** die Mittel zur Steuerung (MC) eine dritte Konfiguration (MAVE) der Motorenanlage (10) im Vorwärtsgang des Fahrzeugs bestimmen können, in der der Verbrennungsmotor (20) nicht arbeitet (I) und in der die erste (22) und zweite (40) elektrische Maschine als Motor arbeiten (M).

8. Motorenanlage (10) gemäß Anspruch 4, **dadurch gekennzeichnet, dass** die Mittel zur Steuerung (MC) eine vierte Konfiguration (MAVT) der Motorenanlage (10) im Vorwärtsgang des Fahrzeugs bestimmen können, in der der Verbrennungsmotor (20) arbeitet (M), die erste elektrische Maschine (22) nicht arbeitet (I) und die zweite elektrische Maschine (40) als Stromgenerator arbeitet (G).

9. Motorenanlage (10) gemäß Anspruch 4, **dadurch gekennzeichnet, dass** die Mittel zur Steuerung (MC) eine fünfte Konfiguration (MAVH1) der Motorenanlage (10) im Vorwärtsgang des Fahrzeugs bestimmen können, in der der Verbrennungsmotor (20) arbeitet (M), die erste elektrische Maschine (22) nicht arbeitet (I) und die zweite elektrische Maschine (40) als Motor arbeitet (M).

10. Motorenanlage (10) gemäß Anspruch 4, **dadurch gekennzeichnet, dass** die Mittel zur Steuerung (MC) eine sechste Konfiguration (MAVH2) der Motorenanlage (10) im Vorwärtsgang des Fahrzeugs bestimmen können, in der der Verbrennungsmotor (20) arbeitet, die erste elektrische Maschine (22) als Motor arbeitet (M) und die zweite elektrische Maschine (40) als Stromgenerator arbeitet (G).

11. Motorenanlage (10) gemäß Anspruch 4, **dadurch gekennzeichnet, dass** die Mittel zur Steuerung (MC) eine siebte Konfiguration (MAVH3) der Motorenanlage (10) im Vorwärtsgang des Fahrzeugs bestimmen können, in der der Verbrennungsmotor (20) arbeitet (M) und in der die erste (22) und die zweite (40) elektrische Maschine als Motoren arbeiten (M).

12. Motorenanlage (10) gemäß Anspruch 4 in Kombination mit Anspruch 2, **dadurch gekennzeichnet, dass** die Mittel zur Steuerung (MC) auf Mittel zum Feststellen (46) der Achswelle (44) der zweiten elektrischen Maschine (40) im Verhältnis zum feststehenden Gehäuse (25) der Motorenanlage (10) einwirken können, um eine achte Konfiguration (MARE) der Motorenanlage (10) im Rückwärtsgang des Fahrzeugs zu bestimmen, in der der Verbrennungsmotor (20) nicht arbeitet (I), die erste elektrische Maschine (22) als Motor arbeitet (M) und die zweite elektrische Maschine (40) nicht arbeitet (I), wobei die Achswelle (44) der zweiten elektrischen Maschine (40) durch die Mittel zum Feststellen (46) festgestellt ist.

13. Motorenanlage (10) gemäß Anspruch 4, **dadurch gekennzeichnet, dass** die Mittel zur Steuerung (MC) eine neunte Konfiguration (RE) der Motorenanlage (10) im Vorwärtsgang und bei Verlangsamung des Fahrzeugs bestimmen können, in der der Verbrennungsmotor (20) nicht arbeitet (I) und in der die erste (22) und die zweite (40) elektrische Maschine als Stromgenerator arbeiten (G).

14. Motorenanlage (10) gemäß Anspruch 4, **dadurch gekennzeichnet, dass** die Mittel zur Steuerung (MC) eine zehnte Konfiguration (RH) der Motorenanlage (10) im Vorwärtsgang und bei Verlangsamung des Fahrzeugs bestimmen können, in der der Verbrennungsmotor (20) arbeitet (M) und in der die erste (22) und die zweite (40) elektrische Maschine als Stromgenerator arbeiten (G).

## Claims

1. A power unit (10) for a hybrid-drive vehicle operating in a plurality of configurations (A1, A2, MAVE, MAVT, MAVH1, MAVH2, MAVH3, MARE, RE, RH), of the type in which the components of an epicyclic train (12) such as a ring gear (14), a sun gear (16) and a planet gear(s) carrier (18) are rotatably connected to members of the power unit (10) such as a shaft (21) of a first electrical machine (22), an output shaft (30) of a heat engine (20) and an axle (28) intended to transmit drive power to wheels (26) of the vehicle, of the type which comprises a second electrical machine (40) which is interposed between the output shaft (30) of the heat engine (20) and the component of the epicyclic train (12) which is rotatably connected thereto, and control means (MC) which are capable of associating given operating modes (I, M, G, A) of the heat engine (20) and the two electrical machines (22, 40) with the operating configurations (A1, A2, MAVE, MAVT, MAVH1, MAVH2, MAVH3, MARE, RE, RH) of the power unit (10), **characterised in that** the ring gear (14) is rotatably connected to the axle (28), the sun gear (16) is rotatably connected to the shaft (21) of the first electrical machine (22) and the planet gear carrier (18) is rotatably connected to the shaft (44) of the second electrical machine (40).

2. A power unit according to the preceding claim **characterised in that** the shaft (21) of the first electrical machine (20) is connected to a fixed casing (25) of the power unit (10) by way of a first freewheel device (23) so as to rotate only in one direction.

3. A power unit (10) according to one of the preceding claims **characterised in that** the shaft (44) of the second electrical machine (40) is rotatably connected to the output shaft (30) of the heat engine (20) by way of a second freewheel device (42) to prevent the heat engine (20) from rotating faster than the second electrical machine (40) and so that the second electrical machine (40) can rotate only in the direction of the output shaft of the heat engine (20).

4. A power unit (10) according to any one of the preceding claims **characterised in that** the two electrical machines (22, 40) may each operate in a motor mode (M) or in a power generator mode (G).

5. A power unit (10) according to claim 4 **characterised in that** the control means (MC) are capable of determining a first configuration (A1) of the power unit (10) when the vehicle is stopped, in which the heat engine (20) operates (M), the first electrical machine (22) operates in a motor mode (M) and the second electrical machine (40) operates in a power generator mode (G).

6. A power unit (10) according to claim 4 **characterised in that** the control means (MC) are capable of determining a second configuration (A2) of the power unit (10) when the vehicle is stopped, in which the heat engine (20), the first electrical machine (22) and the second electrical machine (40) do not operate (I).

7. A power unit (10) according to claim 4 **characterised in that** the control means (MC) are capable of determining a third configuration (MAVE) of the power unit (10) in forward travel of the vehicle, in which the heat engine (20) does not operate (I) and in which the first (22) and second (40) electrical machines operate in a motor mode (M).

8. A power unit (10) according to claim 4 **characterised in that** the control means (MC) are capable of determining a fourth configuration (MAVT) of the power unit (10) in forward travel of the vehicle, in which the heat engine (20) operates (M), the first electrical machine (22) does not operate (I) and the second electrical machine (40) operates in a power generator mode (G).

9. A power unit (10) according to claim 4 **characterised in that** the control means (MC) are capable of determining a fifth configuration (MAVH1) of the power unit (10) in forward travel of the vehicle, in which the heat engine (20) operates (M), the first electrical machine (22) does not operate (I) and the second electrical machine (40) operates in a motor mode (M).

10. A power unit (10) according to claim 4 **characterised in that** the control means (MC) are capable of determining a sixth configuration (MAVH2) of the power unit (10) in forward travel of the vehicle, in which the heat engine (20) operates, the first electrical machine (22) operates in a motor mode (M) and the second electrical machine (40) operates in a power generator mode (G).

11. A power unit (10) according to claim 4 **characterised in that** the control means (MC) are capable of determining a seventh configuration (MAVH3) of the power unit (10) in forward travel of the vehicle, in which the heat engine (20) operates (M), and in which the first (22) and second (40) electrical machines operate in a motor mode (M).

12. A power unit (10) according to claim 4 in combination with claim 2 **characterised in that** the control means (MC) are capable of acting on means (46) for immobilisation of the shaft (44) of the second electrical machine (40) with respect to the fixed casing (25) of the power unit (10) to determine an eighth configuration (MARE) of the power unit (10) in reverse travel of the vehicle, in which the heat engine (20) does not operate (I), the first electrical machine (22) operates in a motor mode (M) and the second electrical machine (40) is not operating (I), the shaft (44) of the second electrical machine (44) being immobilised by the immobilisation means (46).

13. A power unit (10) according to claim 4 **characterised in that** the control means (MC) are capable of determining a ninth configuration (RE) of the power unit (10) in forward travel of the vehicle and when the vehicle is slowing down, in which the heat engine (20) does not operate (I) and in which the first (22) and second (40) electrical machines operate in a power generator mode (G).

14. A power unit (10) according to claim 4 **characterised in that** the control means (MC) are capable of determining a tenth configuration (RH) of the power unit (10) in forward travel of the vehicle and when the vehicle is slowing down, in which the heat engine (20) operates (M) and in which the first (22) and second (40) electrical machines operate in a power generator mode (G).
